# EUROPEAN PATENT APPLICATION

(11) **EP 3 057 072 A2**
(43) Date of publication of application: **17.08.2016**
(21) Application number: 16159061.7
(22) Date of filing: 27.02.2009
(51) Int. Cl.: G08B 7/06, G08B 17/00, G08B 25/10, H04B 7/15, H01Q 1/00, G08B 25/00

(54) **FIRE-PREVENTING TERMINAL DEVICE**

(30) Priority: 14.03.2008 JP 2008065574
(62) Divisional of application: 09719881.6
(71) Applicant: HOCHIKI CORPORATION, Tokyo 141-8660 (JP)
(72) Inventor: NAKAMURA, Yoshio, Shinagawa-ku, Tokyo 141-8660 (JP)
(74) Representative: Pfenning, Meinig & Partner mbB

(57) **Abstract**

To provide a fire-preventing terminal device that can eliminate the need to newly lay a power line and a signal line and can avoid problems caused by battery driving. Display lights 10 provided in a fire-preventing area each include a display unit that transmits fire-preventing information in the fire-preventing area to outside, and an antenna that relays a signal transmitted between fire sensors 1 and receiving relays 2 placed in the fire-preventing area, and transmits a signal wirelessly transmitted from the fire sensors 1 to the receiving relays 2.

## Description

### TECHNICAL FIELD

The present invention relates to a fire-preventing terminal device installed in a fire-preventing area.

### BACKGROUND ART

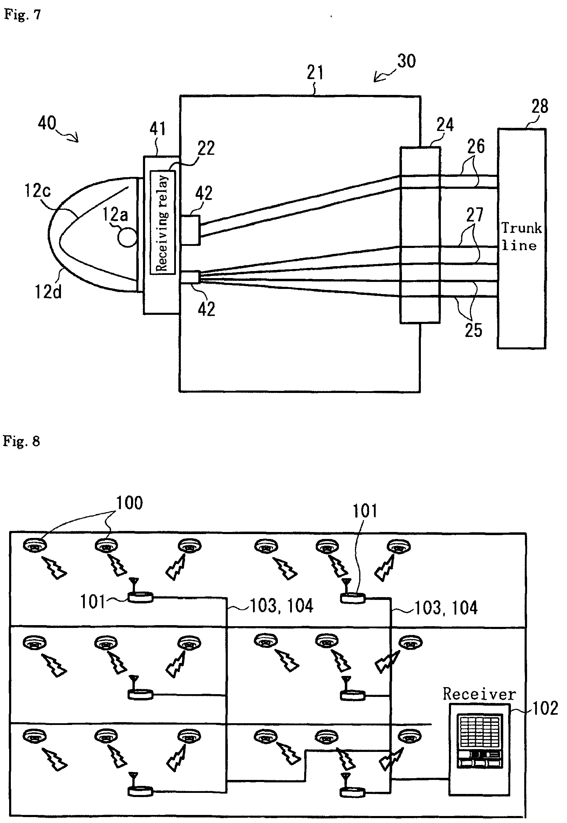

Conventionally, fire-preventing sensor networks are widely used that sense occurrence of disasters in various fire-preventing areas such as industrial and commercial facilities, and notify thereof. Fig. 8 is an interior arrangement diagram of a conventional fire-preventing sensor network. This fire-preventing sensor network includes fire sensors 100, receiving relays 101, and a receiver 102 on each floor in a fire-preventing area. The fire sensor 100 detects occurrence of fire in the fire-preventing area, and, upon detection of the fire occurrence, wirelessly transmits a signal including a fact that the fire occurrence is detected, an address of the sensor and the like. The receiving relay 101 is driven by power from a power line 104 to receive a wireless signal from the fire sensor 100 and transmit the received wireless signal to the receiver 102 through a signal line 103. The receiver 102 is placed in a fire-prevention management room in the fire-preventing area, for example, and wiredly receives the signal from the receiving relays 101 to perform control of ganged devices, transfer output of a fire signal and the like.

In the fire-preventing sensor network, wireless communication ranges between the fire sensors 100 and the receiving relays 101 are limited, or arrival ranges of the wireless signal greatly vary with ambient environments such as an opening/closing state of a fire door or fire shutter. Therefore, when an installation area of the fire sensors 100 is wide, many of the receiving relays 101 need to be installed accordingly. However, when the number of receiving relays 101 is increased, burdens of laying lines for the receiving relays 101, such as the signal line 103 and the power line 104, are also increased. (In Fig. 8, the signal line 103 and the power line 104 are collectively shown as one straight line for sake of simplicity; however, it is actually necessary to lay the signal line 103 and the power line 104 individually for the receiving relay 101.)

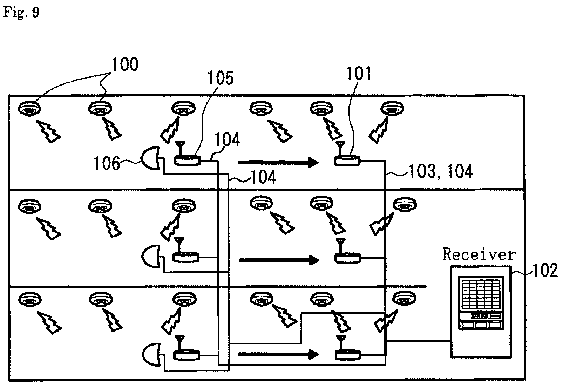

There has been proposed another fire-preventing sensor network that uses wireless repeaters, instead of the receiving relays 101 installed relatively far from the receiver 102. Fig. 9 is an interior arrangement diagram of a conventional fire-preventing sensor network using the repeaters. Repeaters 105 are arranged on ceilings or walls of a fire-preventing area to receive a wireless signal transmitted from each fire sensor 100 and wirelessly transmit the received wireless signal to the receiving relays 101. When the repeaters 105 are used, only the power line 104 needs to be connected to the repeaters 105, and the signal line 103 that is laid between the receiving relays 101 and the receiver 102 in the example shown in Fig. 8 can be omitted. Therefore, the burdens of laying lines can be reduced. Fig. 9 further shows display lights 106 for notifying a user of positions of bush-button transmitters or fire hydrants. The display light 106 performs only display output and does not perform wired output of signals, and accordingly only the power line 104 is connected thereto like the repeater 105. Patent Document 1 discloses that a relay is installed to relay a transmission signal between a sensor terminal and a control terminal device, and a monitor device, for example.

Patent Document 1: Japanese Patent Application Laid-open No. 2006-106996

### DISCLOSURE OF INVENTION

### PROBLEM TO BE SOLVED BY THE INVENTION

However, even when the repeaters are used, an operation of laying the power line for the repeaters is still required and some burden of laying the lines remains.

To solve this problem, it is possible that the repeaters are driven by batteries to eliminate the power line. However, to quickly perform relay of the wireless signal to maintain and improve a fire detection speed, the repeaters need to be in constant receiving statuses, which increases power consumption of the repeaters. Accordingly, considering that the repeaters may stop operating due to flattening of batteries or there is the need to periodically replace the batteries of the repeaters, it is practically difficult to drive the repeaters by batteries.

The present invention has been achieved in view of the above, and provides a fire-preventing terminal device that can eliminate the need to newly lay a power line and a signal line and can avoid the problem caused by battery drive.

### MEANS FOR SOLVING PROBLEMS

To solve the above problems and achieve the object, the fire-preventing terminal device according to claim 1 provides a fire-preventing terminal device installed in a fire-preventing area, the device comprising: a fire-preventing-information transmitting unit that transmits fire-preventing information in the fire-preventing area to outside of the fire-preventing terminal device; and a receiving relay unit that relays a signal between a plurality of communicating devices installed in the fire-preventing area, and receives a signal wirelessly transmitted from a part of the communicating devices and wirelessly or wiredly transmits the received signal to another part of the communicating devices.

The fire-preventing terminal device according to claim 2 provides the fire-preventing terminal device according to claim 1, wherein the fire-preventing-information transmitting unit comprises: a terminal unit that performs input or output of information to or from outside of the fire-preventing terminal device; and a device body that accommodates therein a portion other than the terminal unit of the fire-preventing-information transmitting unit, and the receiving relay unit is placed within the terminal unit, and the terminal unit is detachable from the device body.

The fire-preventing terminal device according to claim 3 provides the fire-preventing terminal device according to claim 1 or 2, wherein the fire-preventing-information transmitting unit comprises a device body, and a nonmetallic cover that protrudes outside from the device body, the receiving relay unit comprises an antenna that receives or transmits a wireless signal from or to the communicating devices, and the antenna is placed within the nonmetallic cover.

The fire-preventing terminal device according to claim 4 provides the fire-preventing terminal device according to any one of claims 1 to 3, wherein the receiving relay unit comprises a wireless-signal-abnormality notifying unit that, when a wireless signal received from the communicating device has strength equal to or lower than a predetermined threshold, transmits abnormality of the wireless signal to outside of the fire-preventing terminal device.

The fire-preventing terminal device according to claim 5 provides the fire-preventing terminal device according to any one of claims 1 to 4, comprising a frequency setting unit that sets a frequency of a wireless signal relayed by the receiving relay unit.

### EFFECT OF THE INVENTION

According to the invention described in claim 1, a wireless relay function is included in the fire-preventing terminal device. Therefore, the wireless relay function can be achieved by using a power line laid in an existing fire-preventing terminal device as it is, and the need to newly lay a power line is eliminated. Further, because the wireless relay is performed, it is unnecessary to lay a line for signals. Accordingly, the wireless relay function can be achieved while saving effort of laying lines, and the effort and cost required for the conventional repeater installation can be reduced. Moreover, the fire-preventing terminal device is supplied with power by the power line, and there is no risk of flattening of batteries which may occur when a battery system is used. Therefore, a highly-reliable fire-preventing device can be constructed. An installation space can be reduced as compared to the case where the fire-preventing terminal device and a wireless repeater are separately installed.

According to the invention described in claim 2, the terminal unit that incorporates the receiving relay unit is detachable from the device body. Therefore, the wireless relay function can be provided only by attaching the terminal unit to the existing device body, and the wireless relay function can be installed more easily.

According to the invention as described in claim 3, the antenna is included within the nonmetallic cover. Therefore, the signal is not interrupted by the cover, and the wireless communication range can be expanded. Because the antenna can be covered from outside with the cover, tamper with the antenna can be prevented, and the wireless function can be provided while keeping the antenna in low profile. Accordingly, the appearance of the fire-preventing area can be improved.

According to the invention as described in claim 4, when the wireless signal has strength equal to or lower than the predetermined threshold, abnormality of the wireless signal can be transmitted to outside of the fire-preventing terminal device. Therefore, a reception status of radio waves from the fire-preventing wireless device can be easily known.

According to the invention as described in claim 5, the frequency of the wireless signal to be relayed can be set. Therefore, signal interference can be prevented.

### BRIEF DESCRIPTION OF THE DRAWINGS

[Fig. 1] An interior arrangement diagram of a fire-preventing sensor network including a display light as a fire-preventing terminal device according to a first embodiment of the present invention.
[Fig. 2] A block diagram functionally and conceptually showing an electrical configuration of the display light.
[Fig. 3] A side view of the display light.
[Fig. 4] An interior arrangement diagram of a fire-preventing sensor network including a device accommodating box as a fire-preventing terminal device according to a second embodiment.
[Fig. 5] A side view schematically showing the device accommodating box.
[Fig. 6] A block diagram showing an electrical configuration of a receiving relay.
[Fig. 7] A side view schematically showing a device accommodating box according to a third embodiment.
[Fig. 8] An interior arrangement diagram of a conventional fire-preventing sensor network.
[Fig. 9] An interior arrangement diagram of a conventional fire-preventing sensor network using repeaters.

### EXPLANATIONS OF REFERENCE NUMERALS

- 1, 100: fire sensor
- 2, 22, 101: receiving relay
- 3, 102: receiver
- 10, 23, 40, 106: display light
- 11: device body
- 11a: power circuit
- 11b: battery
- 11c: wireless circuit
- 11d: setting switch
- 11e: control circuit
- 11f: abnormality notifying unit
- 12: display unit
- 12a: main display light
- 12b: sub-display light
- 12c: antenna
- 12d: display light cover
- 13, 25, 26, 104: power line
- 20, 30: device accommodating box
- 11g, 21: case
- 22a: contact output circuit
- 22b: display-light driving circuit
- 24: line through hole
- 27, 103: signal line
- 28: trunk line
- 29: coaxial cable
- 41: display light base
- 42: connection connector
- 105: repeater

### BEST MODE(S) FOR CARRYING OUT THE INVENTION

Embodiments of a fire-preventing terminal device according to the present invention will be explained below in detail with reference to the accompanying drawings. First, [I] the basic concept common to respective embodiments is explained, [II] specific contents of the respective embodiments are then explained, and finally [III] modifications of the respective embodiments are explained. Note that the present invention is not limited to the embodiments.

### [I] Basic concept common to respective embodiments

The basic concept common to respective embodiments is described first. The embodiments relate to fire-preventing terminal devices installed in a fire-preventing area. An arbitrary place can be selected as a specific example of the fire-preventing area including industrial facilities, and commercial facilities such as a shopping mall and an office complex, for example. The fire-preventing terminal device generally includes a fire-preventing-information transmitting unit that transmits fire-preventing information in the fire preventing area to outside of the fire-preventing terminal device, and a receiving relay unit that receives a signal wirelessly transmitted from a part of a plurality of communicating devices and wirelessly or wiredly transmits the received signal to another part of the plural communicating devices.

The fire-preventing-information transmitting unit is a push-button transmitter for notifying of occurrence of fire, a display light or an evacuation guidance sign for displaying occurrence of fire, or a bell for acoustically outputting occurrence of fire, for example. The fire-preventing-information transmitting unit transmits information related to occurrence of fire to outside in various forms. That is, the forms of transmission include notice, display, and acoustic output, and include all forms directed to persons and devices outside the fire-preventing terminal device. The information to be transmitted is not limited to one related to occurrence of fire, and includes information related to all disasters included in natural and human-made disasters. The information is not limited to one indicating that a fire has occurred, and also includes preliminary information before occurrence of disasters and information after occurrence of disasters.

The receiving relay unit has a function included in a conventional repeater or receiving relay, for example, and has a function that receives a wireless signal transmitted from each fire sensor, and wirelessly transmits the received wireless signal to a receiving relay or wiredly transmits the wireless signal to a receiver. Other arbitrary relay functions can be adopted as the receiving relay function. For example, the receiving relay unit can have a function different from the repeater or the receiving relay depending on contents of the signal, relay targets of the signal, relay timings of the signal or the like.

One characteristic of the fire-preventing terminal devices according to the respective embodiments is that the fire-preventing-information transmitting unit and the receiving relay unit are integrally included in one device. As one example, a fire-preventing terminal device is configured by installing a repeater into an existing bell for acoustically outputting occurrence of fire. In this configuration, the repeater can be supplied with power by using an existing power line for the bell, and the need to newly lay a power line for the repeater is eliminated. Particularly because the bell and the repeater are commonly arranged at positions close to each other, it is easy to integrate the bell and the repeater with each other.

### [II] Specific contents of respective embodiments

The specific contents of the respective embodiments according to the present invention are explained next.

### [First embodiment]

A first embodiment of the present invention is explained first. This embodiment is a mode in which a display light as the fire-preventing terminal device includes a function of a repeater as a fire-preventing relay device.

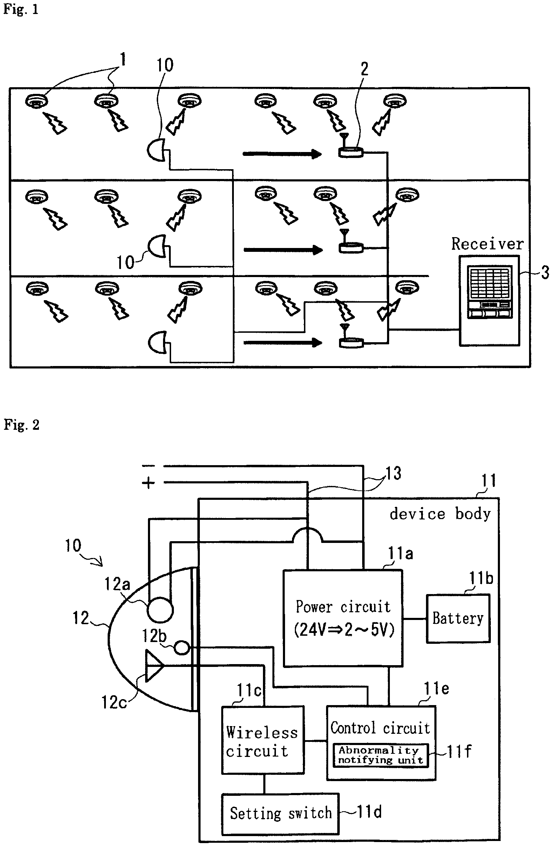

Fig. 1 is an interior arrangement diagram of a fire-preventing sensor network including a display light as the fire-preventing terminal device according to the first embodiment. This fire-preventing sensor network includes fire sensors 1, receiving relays 2, a receiver 3, and display lights 10 on each floor in a fire-preventing area. The fire sensors 1, the receiving relays 2, and the receiver 3 can be configured in a similar manner to that in the conventional example, and only constituent elements particularly related to the present embodiment are explained below.

The fire sensors 1 are placed spaced apart on ceilings or walls in the fire-preventing area, and correspond to communicating devices in claims. The fire sensor 1 includes a detecting unit that detects occurrence of fire based on smoke or heat in a known method, and a communicating unit that, upon detection of fire through the detecting unit, transmits a signal including that the fire is detected, an address of the sensor and the like. The fire sensor 1 is particularly configured as a wireless sensor, and the communication unit wirelessly transmits wireless communication through an antenna. Respective constituent elements of the fire sensor 1 are not shown (the same is true for respective constituent elements of the receiving relay 2 and the receiver 3).

The receiving relays 2 are placed at positions near the fire sensors 1 in the fire-preventing area, and wiredly connected to the receiver 3 via a signal line. The receiving relay 2 includes a receiving unit that receives a wireless signal transmitted from the fire sensor 1 or the display light 10, via an antenna (not shown), a transforming unit that transforms the wireless signal received by the receiving unit into a wired signal, and a transmitting unit that transmits the wired signal transformed by the transforming unit to the receiver 3 via a signal line.

The receiver 3 is placed in a management room provided outside the fire-preventing area, and includes a receiving unit that receives the signal transmitted from each of the receiving relays 2 via the signal line, a managing unit that performs control of ganged devices, a transfer output process of a fire signal and the like, based on the signal received by the receiving unit, and an output unit that notifies of fire.

The display light 10 is explained next. The display light 10 is a device having a function of a conventional display light integrated with a function of a repeater, and corresponds to a fire-preventing terminal device in the claims. The display lights 10 are placed near transmitters or fire hydrants on a ceiling or a wall in the fire-preventing area to notify a user of presence of the transmitters or the fire hydrants, and are placed at positions capable of receiving the wireless signal from the fire sensors 1 to relay the wireless signal. Fig. 2 is a block diagram functionally and conceptually showing an electrical configuration of the display light 10. The display light 10 includes a device body 11 and a display unit 12. Respective constituent elements of the device body 11 and the display unit 12 are electrically connected to each other as shown in Fig. 2.

The device body 11 incorporates a power circuit 11 a, a battery 11 b, a wireless circuit 11 c, a setting switch 11 d, and a control circuit 11 e. The power circuit 11 a adjusts power-supply voltage (24 volts, for example) supplied by a power line 13 to predetermined voltage (2 to 5 volts, for example), and supplies the adjusted voltage to the control circuit 11e. A power line laid for a conventional display light can be used as it is as the power line 13, and there is no need to newly lay the power line 13. The battery 11 b is an emergency power supply to be used when the power supply from the power line 13 is interrupted. The battery 11 b is charged by the power supply from the power line 13 during the power supply therefrom, and then power from the battery 11 b is supplied to the control circuit 11 e through the power circuit 11 a. The wireless circuit 11 c transmits a wireless signal received via an antenna 12c (described later), via the antenna 12c. The setting switch 11 d is used to set a frequency of a wireless signal relayed by the display light 10, and corresponds to a frequency setting unit in the claims. The setting switch 11 d can have an arbitrary specific configuration, and is configured as a selector switch for selecting one of plural (three in this embodiment) predetermined frequencies, for example. The control circuit 11 e is for controlling the respective constituent elements of the display light 10, and includes an integrated circuit (IC) and a program executed in the IC, for example. The control circuit 11 e functionally and conceptually includes an abnormality notifying unit 11 f. When the wireless signal received from the fire sensor 1 has strength equal to or lower than a predetermined threshold, the abnormality notifying unit 11f transmits abnormality of the wireless signal to outside of the display light 10 through a sub-display light 12b. The abnormality notifying unit 11f corresponds to a wireless-signal-abnormality notifying unit in the claims. Details of specific control performed by the abnormality notifying unit 11f are described later.

The display unit 12 performs display output of information to outside of the fire-preventing terminal device, and corresponds to a terminal unit in the claims. The display unit 12 includes a main display light 12a, the sub-display light 12b, and the antenna 12c. The main display light 12a is activated to notify the user of presence of a transmitter or a fire hydrant, and is constantly activated by the power directly supplied from the power line 13. The sub-display light 12b is activated or blinked under control of the abnormality notifying unit 11f to notify the user of abnormality in the strength of the wireless signal, and configures the wireless-signal-abnormality notifying unit in the claims together with the abnormality notifying unit 11f. The antenna 12c is for receiving the wireless signal from the fire sensors 1 and transmitting the wireless signal to the receiving relay 2, and is connected to the wireless circuit 11 c. The wireless circuit 11 c and the antenna 12c correspond to a receiving relay unit in the claims.

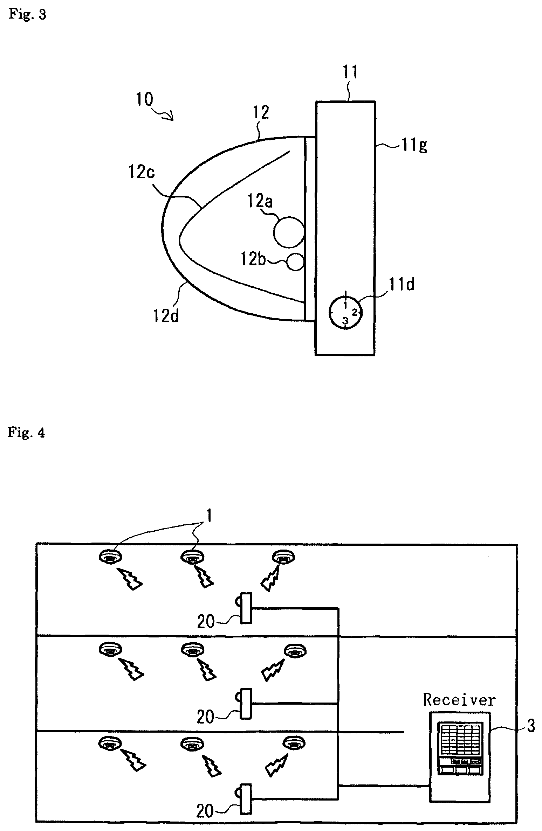

Fig. 3 is a side view of the display light 10. The device body 11 incorporates the power circuit 11 a, the battery 11 b, the wireless circuit 11 c, and the control circuit 11e shown in Fig. 2 (which are not shown in Fig. 3) within a metallic case 11 g in the form of a hollow box, and has the setting switch 11 d on a side thereof. The display light 10 can be installed by fixing the case 11 g configured as described above to an installation surface such as a ceiling surface or a wall surface (not shown) in a known structure.

The display unit 12 incorporates the main display light 12a, the sub-display light 12b, and the antenna 12c shown in Fig. 2 within a display light cover 12d. The display light cover 12d is formed in a hollow hemisphere, and connected to a side surface of the case 11 g to close an opening of the hemisphere. The display light cover 12d is placed to protrude outside from the metallic case 11 g, and formed of a material that allows passage of radio waves, such as a resin. Therefore, even when a signal is transmitted or received through the antenna 12c placed within the cover 12d, the signal is not blocked by the metal of the case 11 g, and a wireless communication range can be expanded. The antenna 12c is formed in a slender rod, for example, and is installed in a bent state within the display light cover 12d to ensure a length of the antenna 12c for ensuring a predetermined communication range.

### (Operation)

An operation of the display light 10 configured as described above is explained. Prior to use, the user sets a frequency of the wireless signal to be relayed by the display light 10 by using the setting switch 11 d. When a plurality of the display lights 10 are placed on plural floors, for example, it is possible to prevent interference of signals by changing relay frequencies with the respective floors. At that time, the frequency is set also to the fire sensors 1 and the receiver 3 in a known method. The fire sensor 1 to be relayed can be registered in each of the display lights 10 to limit the fire sensor 1 to be relayed by each display light 10 and prevent the signal interference. For example, when an address previously assigned to each fire sensor 1 to be relayed is stored in a memory (not shown) of the display light 10, and an address of the fire sensor 1 is included in the signal from each fire sensor 1, the signal is relayed only when the address included in the signal from each fire sensor 1 coincides with the address stored in the memory of the display light 10. The main display light 12a is then activated by power from the power line 13 when the power is supplied therefrom, or by using the battery 11 b as a power supply when the power is interrupted, to notify the user of presence of the transmitter or the fire hydrant.

When sensing fire, the fire sensor 1 wirelessly transmits a wireless signal for notifying of the sensed fire. The display light 10 receives the wireless signal via the antenna 12c, and then transmits the signal via the antenna 12c. The wireless signal transmitted from the display light 10 is received by the receiving relay 2, transformed into a wired signal, and wiredly transmitted to the receiver 3, and the receiver 3 performs required gang control and the like. By relaying the wireless signal through the display light 10 in this way, the wireless signal can be sent to a range where wireless output of the fire sensor 1 cannot reach, and therefore a fire-preventing network that covers a wide area can be constructed.

When the display light 10 receives the wireless signal, the abnormality notifying unit 11f compares strength of the wireless signal received from the fire sensor 1 with the predetermined threshold previously stored in the memory (not shown). When the wireless signal has strength equal to or lower than the threshold, the sub-display light 12b is activated or blinked. Therefore, the user can recognize a reception status of radio waves from the fire sensor 1 by visually confirming a blinking or lighting condition of the sub-display light 12b of the display light 10. The strength of the wireless signal can be determined in a test mode, rather than the case where the strength of the wireless signal is determined during precaution. For example, a test switch (not shown) can be provided in the device body 11, and strength determination of the wireless signal can be performed when the test switch is pressed. In this example, the sub-display light 12b can be activated or blinked according to a result of the determination. The abnormality in the strength of the wireless signal can be notified by blinking the main display light 12a or the like, rather than the sub-display light 12b. In such case, the sub-display light 12b can be eliminated, and notification related to the wireless signal can be performed by using only the existing display function.

### (Effect of first embodiment)

According to the first embodiment, by providing the wireless relay function to the display light 10, the power line 13 laid for the existing display light can be used as it is to achieve the wireless relay function. Therefore, the need for newly laying the power line 13 can be eliminated. It is also unnecessary to lay a line for signals because the wireless relay is performed. Therefore, the wireless relay function can be achieved while saving effort of laying lines, and the effort and cost required for the conventional repeater installation can be reduced. Further, the display light 10 is supplied with power via the power line 13, and there is no risk of flattening of batteries which may occur when the battery system is used. Accordingly, a highly-reliable fire-preventing device can be constructed. Moreover, an installation space can be reduced as compared to the case where the display light 10 and the conventional repeater are separately arranged.

It is particularly reasonable to provide the function of the repeater to the display light 10 because an arrival range of a wireless signal in a low-electric-power security wireless device (the fire sensor 1 in this case) is about 100 meters at a maximum, and the display light 10 is required to be installed just proximal (it is obligated to be installed within 50 meters) to a transmitter. In the conventional technique, if an arrival range of radio waves is determined to be inappropriate at a testing stage after construction of a building, a repeater needs to be newly installed. Installation of a repeater at this stage requires effort of forming an opening for repeater installation and placing a new power line. According to the first embodiment, however, the repeater function can be added only by replacing the existing display light with the display light 10 according to the first embodiment, which eliminates the effort. In the standards of the Fire Service Act, reliability of the fire-preventing device is ensured by using a dedicated line for a fire notifying apparatus that is installed using the receiver 3 as a base point. Therefore, the use of the power line 13 (a dedicated line) for the display light 10 as it is like in the first embodiment meets the concepts of the Fire Service Act.

Because the antenna 12c is accommodated in the display light cover 12d, the signal is not blocked by the metal of the case 11 g, and the wireless communication range can be expanded. The antenna 12c can be covered from outside with the display light cover 12d, and accordingly tamper with the antenna 12c can be prevented and the wireless function can be achieved while keeping the antenna 12c in low profile. Therefore, the appearance of the fire-preventing area can be improved.

Further, because the sub-display light 12b is activated or blinked when the strength of the wireless signal is equal to or lower than the predetermined threshold, the reception status of the radio waves from the fire sensor 1 can be known by visually confirming the blinking or lighting condition of the sub-display light 12b of the display light 10.

Further, the frequency of the wireless signal relayed by the display light 10 can be set by using the setting switch 11 d, and the signal interference can be prevented.

### [Second embodiment]

A second embodiment of the present invention is explained next. This embodiment is a mode in which a receiving function for a wireless signal is integrally provided to a device accommodating box including a display unit. Constituent elements and processes of the second embodiment are identical to those of the first embodiment unless otherwise specified. Like constituent elements and processes are denoted by like reference numerals as those used in the first embodiment as necessary, and detailed explanations thereof will be omitted.

### (Configuration)

Fig. 4 is an interior arrangement diagram of a fire-preventing sensor network including a device accommodating box as a fire-preventing terminal device according to the second embodiment. The fire-preventing sensor network includes the fire sensors 1, the receiver 3, and device accommodating boxes 20. The device accommodating box 20 is a device having a function of a conventional receiving relay incorporated with a conventional device accommodating box including a display light. The device accommodating box 20 corresponds to a fire-preventing terminal device in the claims, and is placed at positions capable of receiving the wireless signal from the fire sensors 1 on the ceiling or the wall in a fire-preventing area. The device accommodating box 20 can have various functions as the fire-preventing terminal device, such as a push-button transmitter, an emergency bell, and a fire hydrant. Configurations thereof are known, and explanations and illustrations thereof will be omitted.

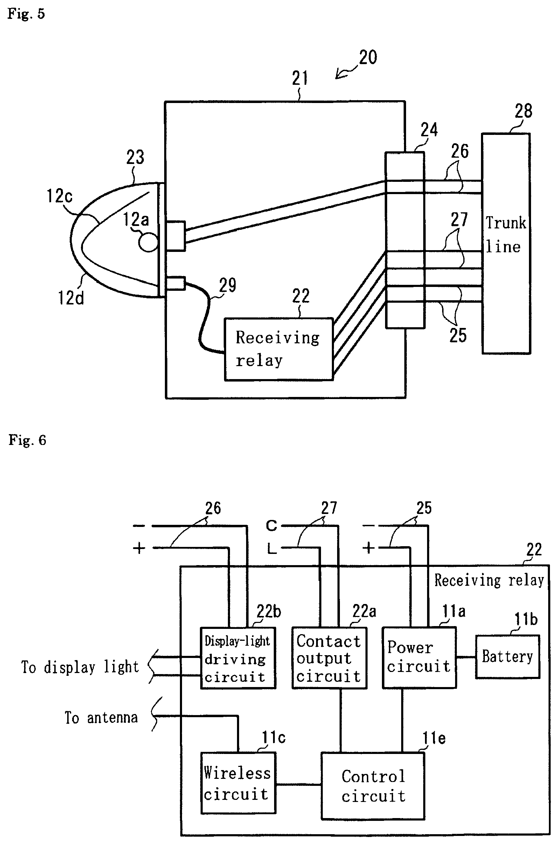

Fig. 5 is a side view schematically showing the device accommodating box 20. The device accommodating box 20 includes a receiving relay 22 within a metallic case 21, and has a display light 23 on a surface thereof. A line through hole 24 is opened on a surface of the device accommodating box 20, and a power line 25 for the receiving relay, a power line 26 for the display light, and a signal line 27 are arranged toward a trunk line 28 through the line through hole 24.

The display light 23 includes the main display light 12a and the antenna 12c within the display light cover 12d. The display light cover 12d is placed to protrude outside from the metallic case 21 and is formed of a material that allows passage of radio waves, such as resin, like in the first embodiment. Therefore, even when a signal is transmitted or received through the antenna 12c placed within the cover 12d, the signal is not blocked by the metal of the case 21, and a wireless communication range can be expanded. The display light 23 is adapted to be detachable from the device accommodating box 20. An arbitrary attachment/detachment structure can be used, and a thread groove (not shown) formed on an end of the display light cover 12d is screwed with a thread (not shown) formed on the side surface of the case 21, for example.

Fig. 6 is a block diagram showing an electrical configuration of the receiving relay 22. The receiving relay 22 incorporates the power circuit 11 a, the battery 11 b, the wireless circuit 11 c, a contact output circuit 22a, a display-light driving circuit 22b, and the control circuit 11e. The power circuit 11 a adjusts power-supply voltage supplied by the power line 25 for the receiving relay into predetermined voltage, and supplies the adjusted voltage to the control circuit 11 e. The battery 11b is an emergency power to be used when the power supply from the power line 13 is interrupted. The battery 11 b is charged by power supply from the power line 13 during the power supply therefrom, and then power from the battery 11 b is supplied to the control circuit 11 e through the power circuit 11a. The wireless circuit 11c transmits a wireless signal received via the antenna 12c, via the antenna 12c. The contact output circuit 22a contact-outputs a wired signal that is obtained by transforming the wireless signal received through the antenna 12c and the wireless circuit 11 c by means of the control circuit 11 e, to the receiver 3 through the signal line 27. The display-light driving circuit 22b activates the main display light 12a based on power supplied by the power line 26 for the display light. The control circuit 11 e is for controlling the respective constituent elements of the display light 23, and includes an IC and a program executed in the IC, for example. The control circuit 11e particularly transforms the wireless signal received through the antenna 12c and the wireless circuit 11 c into a wired signal of a predetermined format.

The display light 23 is detachably connected to the receiving relay 22. For example, a coaxial cable 29 is detachably connected to the wireless circuit 11 c and a coaxial connector (not shown) provided to the antenna 12c, thereby connecting the antenna 12c of the display light 23 to the wireless circuit 11 c of the receiving relay 22 via the coaxial cable 29, as shown in Fig. 5.

### (Operation)

An operation of the display light 23 configured as described above is explained. When sensing fire, the fire sensor 1 wirelessly transmits a wireless signal for notifying of the sensed fire. The wireless signal is received through the antenna 12c of the display light 23, inputted to the control circuit 11 e through the wireless circuit 11 c, and transformed into a wired signal of the predetermined format. The wired signal is contact-outputted by the contact output circuit 22a to be outputted to the receiver 3 through the signal line 27. The receiver 3 then performs required gang control or the like.

### (Effect of second embodiment)

According to the second embodiment, the display light 23 is detachably provided to the device accommodating box 20. Therefore, by placing the receiving relay 22 within the existing device accommodating box installed in the fire-preventing area and replacing the existing display light with the display light 23 according to the second embodiment, the receiving relay function can be easily provided in addition to the same effect as that of the first embodiment. Particularly because the trunk line 28 for the power lines 25 and 26 and the signal line 27 is normally placed near the device accommodating box 20, the power lines 25 and 26 and the signal line 27 can be easily constructed. Further, because the device accommodating box 20 includes various types of connection terminals or connectors, the device accommodating box 20 can be easily connected to the receiving relay 22 and the trunk line 28, and therefore replacement of the device accommodating box 20 due to failure can be easily achieved. Even when the case 21 of the device accommodating box 20 is made of metal, the display light 23 is protruded from the device accommodating box 20, and accordingly reliability of wireless communication is ensured without a communicating unit provided outside of the device accommodating box 20.

### (Third embodiment)

A third embodiment of the present invention is explained next. This embodiment is a mode in which a receiving relay is integrated into the display light according to the second embodiment. Constituent elements and processes of the third embodiment are identical to those of the second embodiment unless otherwise specified. Like constituent elements and processes are denoted by like reference numerals as those used in the second embodiment as necessary, and detailed explanations thereof will be omitted.

### (Configuration)

Fig. 7 is a side view schematically showing a device accommodating box according to the third embodiment. A device accommodating box 30 includes a display light 40 on a surface of the metallic case 21. The display light 40 includes a display light base 41 in addition to the display light cover 12d. The display light base 41 is a hollow box, in which the receiving relay 22 configured in the same manner as in the second embodiment is placed. That is, the receiving relay 22 is integrated with the display light 40. The display light 40 is detachably fixed to the case 21 and is connected to the power lines 25 and 26 and the signal line 27 drawn into the case 21 through connection connectors 42, and accordingly the device accommodating box 30 can have a display light function and a receiving relay function.

### (Effect of third embodiment)

According to the third embodiment, an equivalent effect to that of the second embodiment is obtained. In addition, the device accommodating box 30 including an identical function to that of the second embodiment can be configured only by replacing the display light placed in the existing device accommodating box with the display light 40 according to the third embodiment and connecting the existing power lines 25 and 26 and the signal line 27 to the display light 40 without the need of a separate receiving relay. Therefore, the device accommodating box 30 can be installed more easily.

### [III] Modifications of respective embodiments

While respective embodiments of the present invention have been explained above, specific configurations and means of the present invention can be arbitrarily modified or improved within the technical scope of the respective inventions described in the claims. Such modifications are explained below.

### (Regarding problem to be solved by the invention and effect of the invention)

The problem to be solved by the invention and the effect of the invention are not limited to those described above, and the present invention can also solve problems not mentioned above or achieve effects not mentioned above. Further, in the present invention, only a part of the problem described above may be solved and only a part of the effect described above may be achieved.

### (Regarding applicable field of the present invention)

Application targets of the present invention are not limited to the inside of constructions such as the industrial facilities and buildings mentioned above, and the present invention can be also applied to all constructions including standard houses, or the outside thereof. The present invention is also applicable to communication through sound waves and light waves, as well as radio waves. Further, the present invention can be also applied to a crime-prevention sensor network or other sensor networks arranged in a fire-preventing area.

### (Regarding fire-preventing terminal device)

In the respective embodiments, the function of the repeater or the receiving relay is integrated with the conventional display light. The repeater function or the receiving relay function can be provided to an arbitrary fire-preventing-information transmitting unit that transmits fire-preventing information in a fire-preventing area to outside of the fire-preventing terminal device, other than the display light. For example, the repeater function or the receiving relay function can be integrated with an acoustic device such as an emergency bell, a push-button transmitter, or an evacuation guidance sign, for example. To expand the wireless communication range, it is preferable that an antenna is placed within a nonmetallic portion that is provided to each fire-preventing terminal device. When a transmitter or the like includes a device body that accommodates an electric element or the like, and a nonmetallic cover that protrudes outside from the device body, an antenna is preferably placed within the nonmetallic cover.

### (Regarding case and device accommodating box)

So long as desired strength is ensured, the case 21 can be formed of a nonmetal such as a high-strength plastic. In this case, the antenna 12c can be installed within the case 21.

### (Regarding communicating device)

As well as the fire sensor 1, an arbitrary device that transmits a wireless signal related to disaster prevention or crime prevention corresponds to the communicating device. Examples thereof include a wireless motion sensor, a wireless transmitter, a crime preventing sensor, and a repeater. The fire-preventing terminal device according to the present invention can be used as a relay device in a sensor network using one of these sensors.

In the following further optional embodiments are described:
1. A fire-preventing terminal device installed in a fire-preventing area, the embodiment comprising:
   a fire-preventing-information transmitting unit that transmits fire-preventing information in the fire-preventing area to outside of the fire-preventing terminal device; and
   a receiving relay unit that relays a signal between a plurality of communicating devices installed in the fire-preventing area, and receives a signal wirelessly transmitted from a part of the communicating devices and wirelessly or wiredly transmits the received signal to another part of the communicating devices
2. The fire-preventing terminal device according to embodiment 1, wherein the fire-preventing-information transmitting unit comprises:
   a terminal unit that performs input or output of information to or from outside of the fire-preventing terminal device; and
   a device body that accommodates therein a portion other than the terminal unit of the fire-preventing-information transmitting unit, and
   the receiving relay unit is placed within the terminal unit, and the terminal unit is detachable from the device body.
3. The fire-preventing terminal device according to embodiment 1 or 2, wherein the fire-preventing-information transmitting unit comprises a device body, and a nonmetallic cover that protrudes outside from the device body, the receiving relay unit comprises an antenna that receives or transmits a wireless signal from or to the communicating devices, and the antenna is placed within the nonmetallic cover.
4. The fire-preventing terminal device according to any one of embodiments 1 to 3, wherein the receiving relay unit comprises a wireless-signal-abnormality notifying unit that, when a wireless signal received from the communicating device has strength equal to or lower than a predetermined threshold, transmits abnormality of the wireless signal to outside of the fire-preventing terminal device.
5. The fire-preventing terminal device according to any one of embodiments 1 to 4, comprising a frequency setting unit that sets a frequency of a wireless signal relayed by the receiving relay unit.

## Claims

1. A fire-preventing terminal device (20) installed in a fire-preventing area, the device comprising:
a metal case (21); and
a fire-preventing-information transmitting unit (23) that transmits fire-preventing information in the fire-preventing area to outside of the fire-preventing terminal device (20) and has a nonmetallic cover (12d) that protrudes outside from the metal case (21),
**characterized in that**
the fire-preventing terminal device (20) comprises:
an antenna (12c); and
a receiving relay unit (22) that relays a signal between a plurality of communicating devices (1, 2, 3) installed in the fire-preventing area, and receives a signal wirelessly transmitted from a part of the communicating devices (1, 2, 3) via the antenna (12c) and wirelessly or wiredly transmits the received signal to another part of the communicating devices (1, 2, 3);
wherein the antenna (12c) is placed within the nonmetallic cover (12d) of the fire-preventing-information transmitting unit (23);
wherein the receiving relay unit (22) is placed within the metal case (21);
wherein the fire-preventing-information transmitting unit (23) is adapted to be detachable from the metal case (21); and
wherein the fire-preventing-information transmitting unit (23) is detachably connected to the receiving relay unit (22) via a cable (29).

2. The fire-preventing terminal device (20) according to claim 1, **characterized in that**
the receiving relay unit (22) receives power supply via a power line (25) for the receiving relay unit (22); and
the fire-preventing-information transmitting unit (23) receives power supply via a power line (26) for the fire-preventing-information transmitting unit (23).

3. The fire-preventing terminal device (20) according to claim 1 or 2, **characterized in that**
the fire-preventing-information transmitting unit (23) is a display light (23), wherein a main display light (12a) is placed within the nonmetallic cover (12d), and
wherein fire-preventing information in the fire-preventing area is transmitted to outside of the fire-preventing terminal device (20) by activating or blinking the main display light (12a).

4. The fire-preventing terminal device (20) according to any one of claims 1 to 3, wherein the receiving relay unit (22) comprises a wireless-signal-abnormality notifying unit (11f) that, when a wireless signal received from the communicating device (1, 2, 3) has strength equal to or lower than a predetermined threshold, transmits abnormality of the wireless signal to outside of the fire-preventing terminal device (20).

5. The fire-preventing terminal device (20) according to any one of claims 1 to 4, comprising a frequency setting unit (11d) that sets a frequency of a wireless signal relayed by the receiving relay unit (22).
